# EUROPÄISCHE PATENTSCHRIFT

(11) **EP 1 837 210 B1**
(45) Veröffentlichungstag und Bekanntmachung des Hinweises auf die Patenterteilung: **29.04.2009**
(21) Anmeldenummer: 07111493.8
(22) Anmeldetag: 16.03.2005
(51) Int. Cl.: B60G 3/20, B62D 7/18, B60G 7/00

(54) **Radaufhängung für ein lenkbares Fahrzeugrad**
Suspension for a steerable vehicle wheel
Suspension pour une roue dirigeable de véhicule

(30) Priorität: 25.03.2004 DE 102004014556
(43) Veröffentlichungstag der Anmeldung: 26.09.2007
(62) Teilanmeldung aus: 05716090.5
(73) Patentinhaber: ZF Friedrichshafen AG, 88038 Friedrichshafen (DE)
(72) Erfinder: Gell, Klaus, 94130 Obernzell (DE)

(56) Entgegenhaltungen:
- BE-A- 530 513
- DE-A1- 3 740 954
- DE-A1- 10 218 380
- DE-A1- 19 850 136
- GB-A- 473 598
- US-A- 5 364 114
- PATENT ABSTRACTS OF JAPAN Bd. 1999, Nr. 03, 31. März 1999 (1999-03-31) & JP 10 315740 A (TOYOTA MOTOR CORP), 2. Dezember 1998 (1998-12-02)
- PATENT ABSTRACTS OF JAPAN Bd. 008, Nr. 227 (M-332), 18. Oktober 1984 (1984-10-18) & JP 59 109407 A (MAZDA KK), 25. Juni 1984 (1984-06-25)

## Beschreibung

Die Erfindung betrifft eine Radaufhängug für ein lenkbares Fahrzeugrad nach der im Oberbegriff von Anspruch 1 näher definierten Art.

Herkömmliche Nutzfahrzeug-Einzelradaufhängungen sind beispielsweise aus der DE 37 40 954 A1 bekannt. Bei dieser Art von Einzelradaufhängung sind obere Querlenker und untere Querlenker einerseits mit dem Fahrzeugrahmen und andererseits mit einem Achsschenkelträger verbunden, wobei der Achsschenkelträger einerseits über eine Luftfeder ebenfalls mit dem Fahrzeugrahmen und andererseits über einen Achsschenkelbolzen mit einem Achsschenkel verbunden ist, welcher um die Drehachse des Achsschenkelbolzens drehbar angeordnet ist.

Diese Art von Einzelradaufhängungen begrenzen die Lenkwinkel, da der Fahrzeugreifen durch die Verbindung der oberen und unteren Querlenker mit dem Achsschenkelträger begrenzt ist. Da der Achsschenkelträger sehr große Kräfte aufnehmen muß, ist dieser massiv auszuführen, was eine aufwendige und kostspielige Herstellung mit sich bringt.

Die DE 198 50 136 A1 offenbart eine Einzelradaufhängung für Nutzfahrzeuge, bei welcher der obere Querlenker über ein Molekulargelenk an einem oberen Halter und der untere Querlenker direkt über ein Kugelgelenk am Achsschenkel verbunden sind, wobei der Achsschenkel über die Lagerung am Halter und das Kugelgelenk drehbar gelagert ist, um eine Lenkbewegung für das Fahrzeugrad ausführen zu können. Eine Feder-Dämpfer-Anordnung ist einerseits mit einem oberen Halter und andererseits mit der Fahrzeugkarosserie verbunden. Der obere Halter ist im Bereich der Verbindung zwischen dem oberen Querlenker und dem Achsschenkel angeordnet.

Diese Anordnung benötigt erheblichen Bauraum, insbesondere für die Kugelgelenke bzw. Lagerungen, da die Radkräfte über diese Kugelgelenke weitergegeben werden, was aufgrund dieser bauraumbedingt großen Lösung zu einer relativ großen Spreizung führt, was wiederum zu hohen Lenkkräften und somit zu Problemen bei der Einhaltung der gesetzlich zugelassenen maximalen Lenkkräfte führt. Da die Lenk- und Federkräfte über die radführenden Lagerungen, insbesondere Kugelgelenke, gehen, verursachen diese eine hohe Reibung. Dies beeinträchtigt den Lenkungsrücklauf nach einer Kurvenfahrt, die Lenkradzentrierung sowie den Fahrzeug-Geradeauslauf.

Der vorliegenden Erfindung liegt die Aufgabe zugrunde, eine Radaufhängung für ein lenkbares Vorderrad zu schaffen, durch welche größere Lenkwinkel erreicht werden und welche kostengünstig hergestellt werden kann.

Die Aufgabe wird mit einer, auch die kennzeichnenden Merkmale des Hauptanspruchs aufweisenden, gattungsgemäßen Radaufhängung gelöst.

Erfindungsgemäß ist der Achsschenkel drehbar um eine Drehachse angeordnet, wobei koaxial zur Drehachse ein Träger angeordnet ist, auf welchem sich der Achsschenkel abstützt und welcher über einen Dämpfer mit dem Fahrzeugrahmen verbunden ist. Ebenfalls koaxial zur Drehachse sind Verbindungsmittel angeordnet, welche mit mindestens einem oberen Querlenker und einem unteren Querlenker verbunden sind. Diese Verbindungsmittel können beispielsweise als Achsschenkelbolzen ausgeführt sein, wobei in einer möglichen Ausgestaltungsform die Enden dieses Achsschenkelbolzens mit Lagerungen versehen sein können, über welche die oberen und unteren Querlenker verbunden sind. Diese Lagerungen können als Rollenlager, Gleitlager oder als Kugelgelenk oder als Molekulargelenk ausgeführt sein. Der Achsschenkel weist Aufnahmen auf, in welche der Achsschenkelbolzen eingeführt ist. Die Lagerungen, welche die oberen und unteren Querlenker mit den Verbindungsmitteln verbinden, sind vorzugsweise innerhalb der Radfelge angeordnet. Dadurch ist es möglich, einen besonders großen Lenkeinschlag zu realisieren. Die Lenker sind vorzugsweise als Dreiecklenker ausgeführt.

In einer weiteren Ausgestaltungsform ist der Achsschenkelbolzen als zweiteiliger Achsschenkelbolzen ausgeführt, wobei die beiden Teile des Achsschenkelbolzens jeweils mit den Querlenkern verbunden und in die Aufnahmen des Achsschenkels eingeführt sind, und sich im Träger, welcher den Dämpfer aufnimmt, treffen.

In einer weiteren Ausgestaltungsform der Erfindung ist der Dämpfer zusätzlich als Federelement ausgeführt, vorzugsweise als Luftfederelement, wodurch ein kompaktes Feder-Dämpfer-Modul entsteht.

In einer weiteren Ausgestaltungsform ist die Verbindung des oberen Querlenkers mit dem Achsschenkelbolzen so ausgeführt, dass auf dieser Verbindung eine Luftfeder angeordnet sein kann, wobei der Dämpfer auf dem Träger verbleibt.

In einer weiteren Ausgestaltungsform ist der Träger, welcher den Dämpfer oder das Luftfeder-Dämpfer-Modul aufnimmt, gabelförmig ausgeführt, wodurch der Achsschenkelbolzen zuerst ein erstes Teil dieses Trägers durchdringt, anschließend den Achsschenkel durchdringt, um danach wiederum den Träger zu durchdringen, um schließlich den Achsschenkel erneut zu durchdringen und an seinem unteren freien Ende mit dem unteren Querlenker verbunden zu sein. Hierbei besteht ebenfalls die Möglichkeit, den Achsschenkelbolzen einteilig oder zweiteilig auszuführen.

In einer weiteren Ausgestaltungsform der Erfindung sind der untere und obere Querlenker zweiteilig ausgeführt, wobei sich die beiden Teile der Querlenker überkreuzen. Durch dieses Überkreuzen kann der mögliche Lenkwinkel zusätzlich vergrößert werden. Es besteht jedoch auch die Möglichkeit, die oberen und unteren Querlenker einteilig auszuführen, wobei diese Querlenker nach der Verbindungsstelle mit dem Achsschenkelbolzen einen Bereich aufweisen, an welchem sich die Querlenkerarme noch nicht trennen bzw. erweitern, wodurch zusätzlich ein größerer Lenkwinkel möglich ist.

Indem die oberen und unteren Querlenker mit dem Achsschenkelbolzen direkt verbunden sind, ragen diese tief in die Felge bis zur Lenkdrehachse, wodurch sich einerseits die Länge der Querlenkers erhöht, was eine bessere Federkinematik ermöglicht und andererseits die Lenkwinkel erhöht werden. Es besteht auch die Möglichkeit, die Querlenkerlänge nicht zu verlängern, wodurch insbesondere bei der Verwendung dieser Radaufhängung bei einem Omnibus die Gangbreite verbreitert werden kann. Indem die Abstützung der Radkräfte über die Dämpferfedereinheit über einen direkten Träger erfolgt, welcher unabhängig von der Verbindung der Querlenker ist, besteht die Möglichkeit, diesen Träger einfach auszuführen, wobei der Vorteil, dass die Radkräfte direkt in den Federdämpfer eingeleitet werden können, erhalten bleibt.

Weitere Merkmale sind der Figuren-Beschreibung zu entnehmen.
Es zeigen:
- Fig. 1: eine räumliche Darstellung der Achsaufhängung mit einem Luftfeder-Dämpfer-Modul, welches mit dem Träger verbunden ist;
- Fig. 2: eine Rückansicht der Radaufhängung, wobei ein Dämpfer mit dem Träger verbunden ist und die Luftfeder sich auf dem Verbindungsteil des Achsschenkelbolzens mit dem oberen Querlenker befindet;
- Fig. 3: eine schematische Darstellung eines zweiteiligen Achsschenkelbolzens, welcher sich innerhalb eines Trägers befindet;
- Fig. 4: eine räumliche Darstellung der Radaufhängung mit einem einteiligen Träger;
- Fig. 5: eine räumliche Darstellung der Radaufhängung mit einem einteiligen Träger mit zwei Lagerstellen;
- Fig. 6: eine räumliche Darstellung einer Radaufhängung mit einer Luftfeder und einem Dämpfer;
- Fig. 7: eine räumliche Darstellung eines einteiligen oberen Querlenkers mit einer Verbindung mit dem Achsschenkelbolzen;
- Fig. 8: eine räumliche Darstellung des Achsschenkelbolzens mit den jeweils zweiteiligen oberen und unteren Querlenkern und
- Fig. 9: eine räumliche Darstellung eines Achsschenkelbolzens mit einteiligen oberen und unteren Querlenkern.

### Fig. 1:

Ein Achsschenkel 1 weist eine obere Aufnahme 2 und eine untere Aufnahme 3 auf, in welcher sich ein Achsschenkelbolzen 4 befindet, welcher koaxial zu einer Drehachse 5 angeordnet ist, um welche sich somit der Achsschenkel 1 drehen kann, um Lenkbewegungen für das Fahrzeugrad 6 auszuführen. Der Achsschenkelbolzen 4 weist an seinem oberen Ende eine Lagerung 7 auf, welche beispielsweise als Rollenlagerung, Gleitlagerung oder als Kugelgelenk oder als Molekulargelenk ausgeführt sein kann, und über welche ein erster Arm 8 und ein zweiter Arm 9 eines oberen Querlenkers 10 verbunden sind. Ebenso weist der Achsschenkelbolzen 4 an seinem unteren Ende eine Lagerung 11 auf, welche wie die Lagerung 7 ausgeführt sein kann und über welche ein erster Arm 12 und ein zweiter Arm 13 eines unteren Querlenkers 14 verbunden sind. Indem die oberen Querlenker 10 und die unteren Querlenker 14 direkt mit dem Achsschenkelbolzen 4 verbunden sind, verlängern sich die Querlenker, was zu einer besseren Feder-Kinematik führt. Vorzugsweise sind die Lagerungen 7 und 11 innerhalb der Felge 15 angeordnet. Zwischen der oberen Aufnahme 2 und der unteren Aufnahme 3 ist ein Träger 16 angeordnet, welcher mit einem Feder-Dämpfer-Modul 17 verbunden ist. Somit stützt sich der Achsschenkel 1 über den Träger 16 und das Feder-Dämpfer-Modul 17 an einem nicht dargestellten Fahrzeugrahmen ab. Der erste Arm 8 und der zweite Arm 9 sowie der erste Arm 12 und der zweite Arm 17 sind ebenfalls an einem nicht dargestellten Fahrzeugrahmen angelenkt. Es besteht auch die Möglichkeit, die Lagerung 7 und 11 nicht direkt auf der Drehachse 5 anzuordnen, sondern den Achsschenkelbolzen 4 an seinen Enden leicht gekröpft auszuführen. Der erste Arm 12 und der zweite Arm 13 sind überkreuzt angeordnet, wodurch der Lenkwinkel zusätzlich erhöht werden kann.

### Fig. 2:

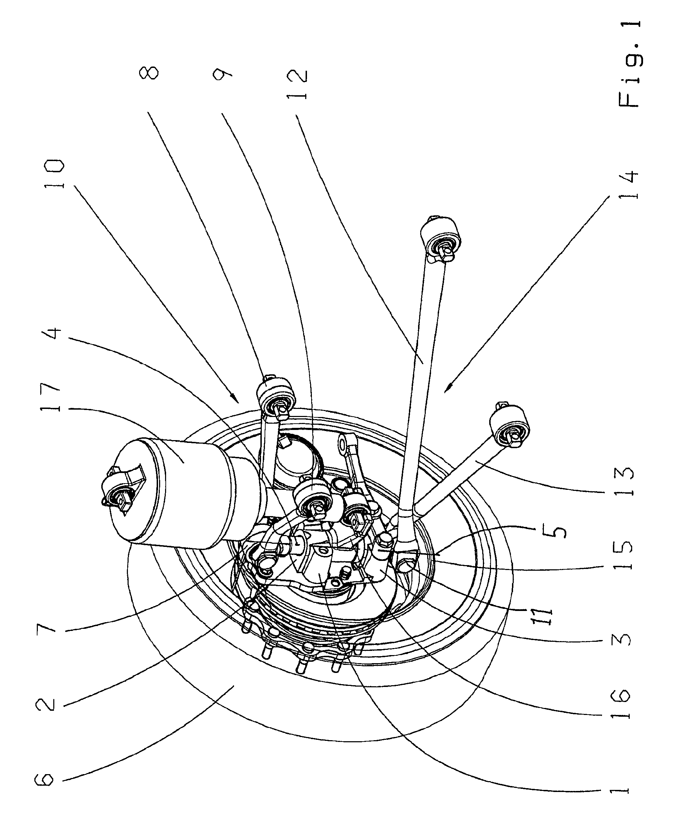

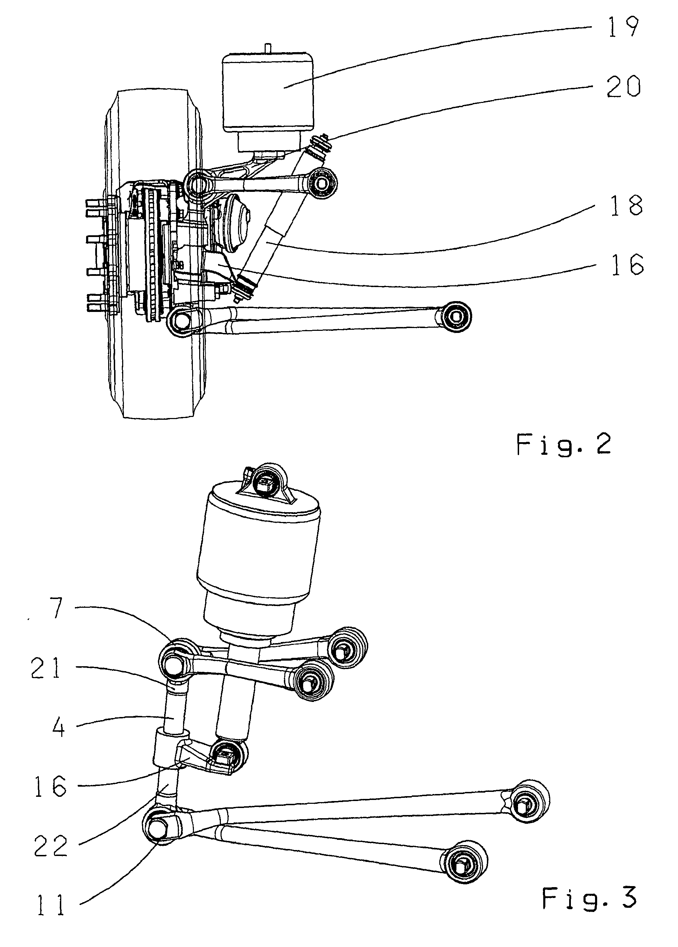

Der prinzipielle Aufbau der Radaufhängung nach Fig. 2 entspricht der Radaufhängung nach Fig. 1, wobei jedoch kein Feder-Dämpfer-Modul verwendet wird, sondern der Träger 16 direkt mit einem Dämpfer 18 verbunden ist, und der Achsschenkelbolzen 4 an seinem oberen Ende so ausgestaltet ist, dass er eine Luftfeder 10 aufnehmen kann. Der Achsschenkelbolzen 4 weist deshalb einen Arm 20 auf, welcher in einer Stütze für die Luftfeder 19 endet.

### Fig. 3:

Die Radaufhängung entspricht der Radaufhängung nach Fig. 1, wobei bei dieser Darstellung zum besseren Verständnis der Achsschenkel 1 mit seinen Anschlußteilen sowie der Felge 15 und dem Rad 6 entfernt wurde. Der Achsschenkelbolzen 4 besteht aus einem ersten Teil 21 und einem zweiten Teil 22, wobei sich diese beiden Teile im Träger 16 treffen. Es besteht auch die Möglichkeit, die Lagerung 7 und die Lagerung 11 mit dem Achsschenkelbolzen 4 zu verschrauben, wodurch dieser einteilig ausgeführt sein kann.

### Fig. 4:

Diese Radaufhängung entspricht der Radaufhängung nach Fig. 1, wobei das Luftfeder-Dämpfer-Modul getrennt als Luftfeder 19 und Dämpfer 18 ausgeführt sind, und der Träger 16 einen ersten Arm 23 und einen zweiten Arm 24 aufweist, wobei der erste Arm 23 mit der Luftfeder 19 und der zweite Arm 24 mit dem Dämpfer 18 verbunden sind.

### Fig. 5:

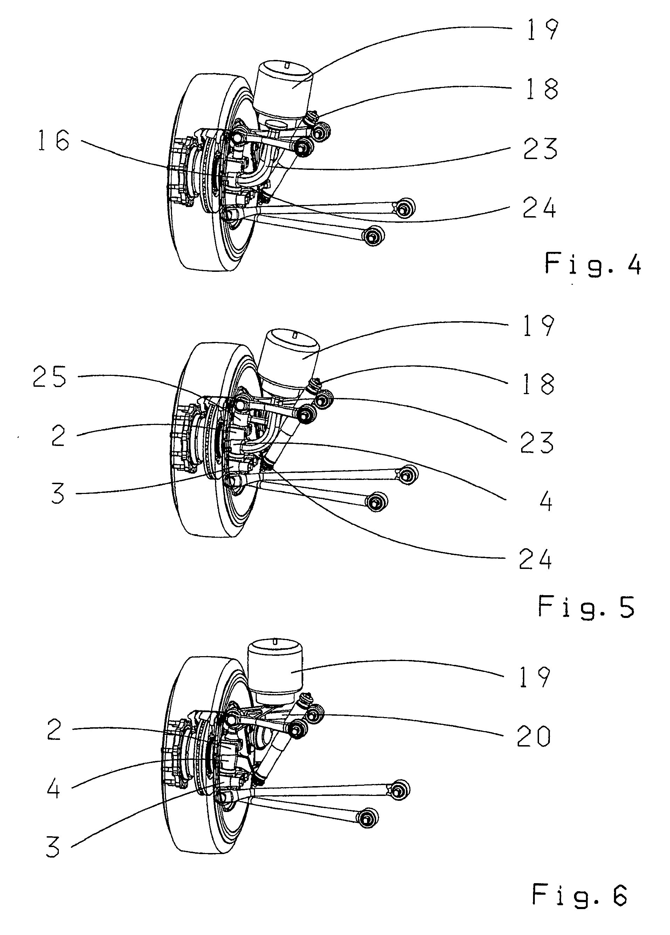

Diese Radaufhängung entspricht der Radaufhängung nach Fig. 4, wobei der Träger 16 einen weiteren Arm 25 aufweist, wodurch der Achsschenkelbolzen 4 zuerst diesen weiteren Arm 25, dann die obere Aufnahme 2 und anschließend wieder den Träger 4 und anschließend die untere Aufnahme 3 durchdringt,

### Fig. 6:

Diese Radaufhängung entspricht der Radaufhängung nach Fig. 2, wobei durch die räumliche Darstellung die Durchdringung des Achsschenkelbolzens 4 durch die obere Aufnahme 2, den Träger 4 und die untere Aufnahme 3 sowie den Arm 20 zur Verbindung der Luftfeder 19 dargestellt ist.

### Fig. 7:

Der obere Querlenker 10 weist einen ersten Arm 8 und einen zweiten Arm 9 auf und ist über ein Kugelgelenk 25 mit dem Achsschenkelbolzen 4 verbunden. In der gezeigten Darstellung ist der Querlenker 10 einteilig ausgeführt, er kann jedoch auch zweiteilig ausgeführt sein.

### Fig. 8:

Der obere Querlenker 10 ist über die Lagerung 7 mit dem Achsschenkelbolzen 4 verbunden, wobei sich der erste Arm 8 und der zweite Arm 9 überkreuzen. Der untere Querlenker 14 ist über die Lagerung 11 mit dem Achsschenkelbolzen 4 verbunden, wobei der erste Arm 12 den zweiten Arm 13 durchdringt.

### Fig. 9:

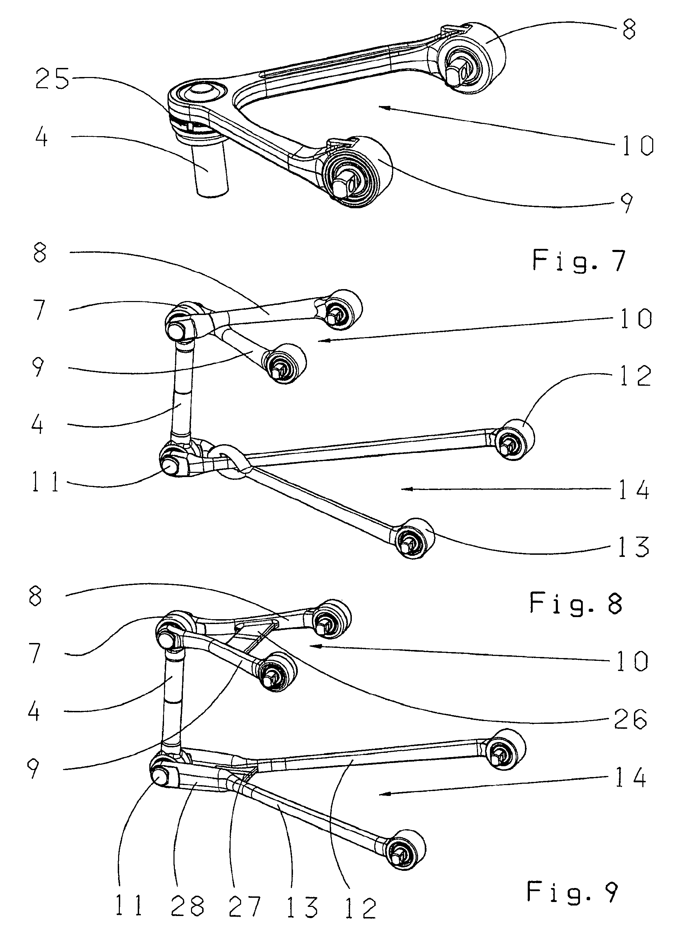

Der obere Querlenker 10 weist einen ersten Arm 8 und einen zweiten Arm 9 auf, welche über einen Steg 26 miteinander und über die Lagerung 7 mit dem Achsschenkelbolzen 4 verbunden sind. Der untere Querlenker 14 weist einen ersten Arm 12 und einen zweiten Arm 13 auf, welche über einen Steg 27 miteinander und über die Lagerung 11 mit dem Achsschenkelbolzen 4 verbunden sind. Die weiteren Bauteile der Radaufhängung sind aus Gründen der Klarheit in den Fig. 7, 8 und 9 nicht dargestellt. Der untere Querlenker 14 weist einen Abschnitt 28 auf, an welchem die beiden Arme 13 und 12 noch nahezu parallel ausgeführt sind und erst anschließend den Querlenker verbreitern, wobei der Abschnitt 28 so ausgeführt ist, dass der Querlenker bei einem vergrößerten Lenkwinkel nicht mit dem Fahrzeugrad kollidiert.

### Bezugszeichen

- 1: Achsschenkel
- 2: obere Aufnahme
- 3: untere Aufnahme
- 4: Achsschenkelbolzen
- 5: Drehachse
- 6: Fahrzeugrad
- 7: Lagerung
- 8: erster Arm
- 9: zweiter Arm
- 10: oberer Querlenker
- 11: Lagerung
- 12: erster Arm
- 13: zweiter Arm
- 14: unterer Querlenker
- 15: Felge
- 16: Träger
- 17: Feder-Dämpfer-Modul
- 18: Dämpfer
- 19: Luftfeder
- 20: Arm
- 21: erster Teil
- 22: zweiter Teil
- 23: erster Arm
- 24: zweiter Arm
- 25: Kugelgelenk
- 26: Steg
- 27: Steg
- 28: Abschnitt

## Patentansprüche

1. Radaufhängung für ein lenkbares Fahrzeugrad mit einem um eine Drehachse (5) drehbar angeordneten Achsschenkel (1), mit einem Träger (16), auf welchem sich der Achsschenkel (1) abstützt, und welcher über einen Dämpfer (18) mit dem Fahrzeugrahmen verbunden ist, mit einem koaxial zur Drehachse (5) angeordneten Achsschenkelbolzen (4), mit mindestens einem oberen Querlenker (10) und mindestens einem unteren Querlenker (14), welche mit dem Fahrzeugrahmen und über mindestens ein Verbindungsmittel (4, 7, 11) mit dem Achsschenkel (1) in Verbindung stehen, **dadurch gekennzeichnet, dass** der Achsschenkel (1) eine obere Aufnahme (2) und eine untere Aufnahme (3) aufweist, und der Träger (16) im Bereich des Achsschenkelbolzens (4) zwischen der oberen Aufnahme (2) und der unteren Aufnahme (3) angeordnet ist wobei der Achsschenkelbolzen (4) in die obere Aufnahme (2) und in den Träger (16) eingeführt ist und der Achsschenkelbolzen (4) in die untere Aufnahme (3) und in den Träger (16) eingeführt ist und der obere Querlenker (10) über Verbindungsmittel (7) direkt mit dem Achsschenkelbolzen (4) verbunden ist und der untere Querlenker (14) über Verbindungsmittel (11) direkt mit dem Achsschenkelbolzen (4) verbunden ist.

2. Radaufhängung nach Anspruch 1, **dadurch gekennzeichnet, dass** der Achssenkelbolzen (4) einteilig ausgeführt ist und die obere Aufnahme (2) und anschließend den Träger (16) und anschließend die untere Aufnahme (3) durchdringt.

3. Radaufhängung nach Anspruch 1, **dadurch gekennzeichnet, dass** der Achsschenkelbolzen (4) zwei Teile (21, 22) aufweist, wobei der erste Teil (21) die obere Aufnahme (2) durchdringt und anschließend in den Träger (16) eingeführt ist und der zweite Teil (22) die untere Aufnahme (3) durchdringt und anschließend in den Träger (16) eingeführt ist.

## Claims

1. Wheel suspension system for a steerable vehicle wheel having an axle stub (1) which is arranged such that it can be rotated about a rotational axis (5), having a carrier (16), on which the axle stub (1) is supported and which is connected to the vehicle frame via a damper (18), having an axle-stub pin (4) which is arranged coaxially with respect to the rotational axis (5), having at least one upper transverse link (10) and at least one lower transverse link (14) which are connected to the vehicle frame and, via at least one connecting means (4, 7, 11), to the axle stub (1), **characterized in that** the axle stub (1) has an upper receptacle (2) and a lower receptacle (3), and the carrier (16) is arranged in the region of the axle-stub pin (4) between the upper receptacle (2) and the lower receptacle (3), the axle-stub pin (4) being inserted into the upper receptacle (2) and into the carrier (16) and the axle-stub pin (4) being inserted into the lower receptacle (3) and into the carrier (16), and the upper transverse link (10) being connected directly to the axle-stub pin (4) via connecting means (7) and the lower transverse link (14) being connected directly to the axle-stub pin (4) via connecting means (11).

2. Wheel suspension system according to Claim 1, **characterized in that** the axle-stub pin (4) is of single-piece configuration and penetrates the upper receptacle (2) and subsequently the carrier (16) and subsequently the lower receptacle (3).

3. Wheel suspension system according to Claim 1, **characterized in that** the axle-stub pin (4) has two parts (21, 22), the first part (21) penetrating the upper receptacle (2) and subsequently being inserted into the carrier (16), and the second part (22) penetrating the lower receptacle (3) and subsequently being inserted into the carrier (16).

## Revendications

1. Suspension de roue pour une roue dirigeable d'un véhicule, comprenant une fusée d'essieu (1) disposé de manière à pouvoir tourner autour d'un axe de rotation (5), un support (16) sur lequel s'appuie la fusée d'essieu (1), et qui est connecté par le biais d'un amortisseur (18) au châssis du véhicule, un boulon de fusée d'essieu (4) disposé coaxialement à l'axe de rotation (5), au moins un bras oscillant transversal supérieur (10) et au moins un bras oscillant transversal inférieur (14), qui sont en liaison avec le châssis du véhicule et, par le biais d'au moins un moyen de liaison (4, 7, 11), avec la fusée d'essieu (1), **caractérisée en ce que** la fusée d'essieu (1) présente un logement supérieur (2) et un logement inférieur (3) et le support (16) est disposé dans la région du boulon de fusée d'essieu (4) entre le logement supérieur (2) et le logement inférieur (3), le boulon de fusée d'essieu (4) étant introduit dans le logement supérieur (2) et dans le support (16), et le boulon de fusée d'essieu (4) étant introduit dans le logement inférieur (3) et dans le support (16), et le bras oscillant transversal supérieur (10) étant connecté par le biais de moyens de liaison (7) directement au boulon de fusée d'essieu (4) et le bras oscillant transversal inférieur (14) étant connecté par le biais de moyens de liaison (11) directement au boulon de fusée d'essieu (4).

2. Suspension de roue selon la revendication 1, **caractérisée en ce que** le boulon de fusée d'essieu (4) est réalisé d'une seule pièce et traverse le logement supérieur (2) et ensuite le support (16), puis le logement inférieur (3).

3. Suspension de roue selon la revendication 1, **caractérisée en ce que** le boulon de fusée d'essieu (4) présente deux parties (21, 22), la première partie (21) traversant le logement supérieur (2) et étant ensuite introduite dans le support (16) et la deuxième partie (22) traversant le logement inférieur (3) et étant ensuite introduite dans le support (16).
